# EUROPEAN PATENT SPECIFICATION

(11) **EP 2 886 470 B1**
(45) Date of publication and mention of the grant of the patent: **04.01.2017**
(21) Application number: 14380038.1
(22) Date of filing: 28.11.2014
(51) Int. Cl.: B65B 43/12, B65B 43/46, B65G 47/71, B65G 47/68

(54) **Transfer device and method for transferring flexible containers**
Übertragungsvorrichtung und Verfahren zur Übertragung von flexiblen Behältern
Dispositif de transfert et procédé de transfert de récipients souples

(30) Priority: 23.12.2013 ES 201331899
(43) Date of publication of application: 24.06.2015
(73) Proprietor: Mespack, S.L., 08130 Santa Perpètua de Mogoda (Barcelona) (ES)
(72) Inventor: Marti Roche, Enric, 08950 Esplugues de Llobregat (Barcelona) (ES); Mora Flores, Francisco, 08100 Mollet del Vallès (Barcelona) (ES); Fité Sala, Menna, 08130 Santa Perpètua de Mogoda (Barcelona) (ES)
(74) Representative: Juncosa Miro, Jaime

(56) References cited:
- EP-A1- 1 172 295
- EP-A1- 1 380 505
- EP-A1- 2 522 583
- EP-A2- 0 999 139
- ES-A1- 2 226 517
- US-A1- 2001 030 102

## Description

### Field of the Art

The present invention generally relates to a transfer device and method for transferring flexible containers from a row of containers to two or more rows of containers in an automatic packaging machine, and more particularly to a transfer device for transferring empty flexible containers which are supplied by a container forming unit or a preformed container supply unit that supplies flexible containers aligned in a horizontal direction of production, forming a horizontal row of aligned and vertically arranged empty flexible containers.

### State of the Art

Document EP12380022 (MESPACK) describes a transfer device for transferring flexible containers from a row of containers supplied by a container forming unit to a packaging unit provided with at least two production lines. Said transfer device uses at least two clamps to achieve said transfer, each clamp assembled on an assembly consisting of carriages and guides arranged in three coordinate axes X, Y, Z, giving each clamp three degrees of freedom to be able to grip a flexible container from a collection position and deliver it to a delivery position arranged in another position that does not share any of said coordinates X, Y or Z.

Several actuators and a cam follower connected to a cam are used to actuate and guide all the clamps, said cam causing movement of two clamps in two opposite directions of a horizontal path X,, upon moving said clamps in a vertical path Z. Said movement generated by the cam follower and the cam allows separating the containers from one another a predetermined distance while at the same time lifting them, furthermore said movement in the horizontal path X but in two opposite directions means that at least half of the flexible containers move in a direction opposite the direction of production, moving backwards.

The different flexible containers move in a transverse path Y by means of actuators, this movement being a product of a different mechanism independent from the mechanism separating the flexible containers a predetermined distance.

This embodiment suffers from great mechanical complication as it requires moving all the clamps simultaneously and in a coordinated manner in the three coordinate axes, in addition to being hardly adaptable or adjustable to change the size or position of the flexible containers.

Document ES2255444B1 (VOLPACK) anticipates a transfer device for flexible containers which delivers flexible containers with a predetermined separation distance between them, but it does not contemplate the possibility of delivering flexible containers collected from a single supply line to two production lines.

Prior art document ES2098169B1 (Batalla) likewise anticipates a transfer device for flexible containers configured for lifting containers and rotating them 90° to deliver them to a single production line, the flexible containers being parallel to one another. This embodiment does not contemplate the possibility of delivering flexible containers to two production lines either.

Document WO9633094A1 (BOSSAR) describes a device whereby continuously supplied flexible containers are separated by cutting means, gripped by lifting clamps, and lifted to a filling station, during the lifting operation, the routes of the lifting clamps are not parallel which allows the flexible containers to be separated a predetermined distance upon reaching said filling station. In addition to feeding a single production line, this embodiment only allows mechanically regulating the separation between flexible containers, this adjustment not being able to be performed by means of programmable means.

### Brief Description of the Invention

The present invention describes a transfer device and method for transferring empty flexible containers in the form of bags made of a heat-sealable material from collection positions to delivery positions.

In the collection positions, the present transfer device receives a supply of empty flexible containers provided by a supply device, which positions in the mentioned collection positions, in a horizontal path and in a production direction, a single horizontal row of empty flexible containers such that they are aligned, adjacent to one another and vertically arranged with at least one filling opening in their upper half, the respective vertical heat-sealed seams being adjacent to one another.

In a preferred embodiment, said supply device is a container forming unit capable of producing flexible containers by means of bending, heat-sealing and cutting a flexible plastic sheet. In an alternative embodiment, said supply device supplies preformed containers.

There is at least one conveyor device in the mentioned delivery positions that removes flexible containers deposited in said delivery positions by the transfer device. There are at least two of said delivery positions, and said at least one conveyor device feeds at least two production lines. Said conveyor device optionally consists of at least one conveying clamp for each delivery position and can furthermore introduce a vertical movement to said flexible containers if the height of the production lines does not coincide with the height of the delivery position.

The transfer device is therefore capable of collecting containers from two collection positions in a single supply line and delivering them in two delivery positions of two parallel production lines, which allows increasing production rate or allows a single container forming unit to be able to simultaneously supply empty flexible containers to two production lines of two different products, for example.

According to a preferred embodiment, the supply device provides flexible containers that are joined to one another, in such case, when the flexible containers are in the collection positions, a cutting device separates them to allow the transfer device to convey them separately; said separation of the flexible containers can occur after gripping and before transferring the containers.

The transfer device is formed by at least two clamps, one for each collection position. Each clamp has means allowing it to actuate the opening and closure thereof, each of them further being assembled on a moving carriage. Said carriages are actuated by at least one translation actuating device (for example, a linear motor) and they can all move in parallel in one translation path. At least one of said clamps can also move in a transverse path on a transverse guide assembled on its respective carriage, said transverse guide being arranged horizontally and in a transverse path, perpendicular to the translation path, and therefore perpendicular to the direction of movement of the carriage.

The at least two clamps can therefore each collect a flexible container from at least two corresponding collection positions by means of actuating and closing the clamps, said collection positions being arranged consecutively and adjacent to one another in one and the same line. Each clamp transfers its corresponding gripped container in the translation path and in the production direction as a result of the movement of the corresponding moving carriage. The mentioned transverse guide assembled on at least one of the carriages allows, in addition to the movement in the translation path, at least one of the clamps to perform a transverse movement in a transverse path, perpendicular to said translation path. This allows, when the carriage reaches the end of its travel, the clamps and the containers conveyed by said clamps which were adjacent to one another in a row in the collection position to become non-adjacent and arranged in at least two rows upon reaching the delivery position, said flexible containers then being able to be delivered to at least two parallel production lines by means of releasing the clamps.

Carrying out this invention with two, three, four or more clamps, with their corresponding moving carriages and transverse guides, which also allows feeding two, three, four or more production lines, is obvious.

According to a preferred embodiment, the mentioned transverse movement perpendicular to the translation path can occur simultaneously with the movement of the moving carriage, guided by a cam follower connected to a cam regulating the transverse position of the clamp depending on the position of the moving carriage in the translation path. In another embodiment, said transverse movement occurs by means of a programmable actuator arranged in the moving carriage.

The length of the translation path of the different carriages conveying respective clamps is preferably different, allowing two or more flexible containers, simultaneously collected by two or more clamps from two or more successive collection positions in the translation path, to be delivered simultaneously in two or more delivery positions, feeding two or more production lines, such that said production lines receive a regular supply of flexible containers in the translation path, such that said flexible containers delivered to each production line are spaced a predetermined distance from one another in the translation path, and/or such that the flexible containers of all the production lines are aligned with one another in the transverse path.

To achieve this effect, in a preferred embodiment the two or more delivery positions are misaligned with one another in the transverse path a distance equal to the width of a flexible container in the translation path, plus the desired predetermined separation distance, or a multiple of that sum.

In another embodiment, delivery positions are aligned in the transverse path.

Additionally, the flexible container collection and delivery rate can be regulated, or different clamps can be prevented from simultaneous collection and/or delivery, thus allowing changing the production rate, or the predetermined distance between the flexible containers fed into the production lines. Said regulation can be performed by means of a programmable adjustment device.

The proposed invention therefore has a very simple construction, since each moving carriage moves only in the translation path, and it can be readily adapted to production needs since the number of production lines can be added or reduced by simply adding or eliminating moving carriages, or activating and deactivating the operation thereof. Furthermore, the separation between delivery positions can be altered and adjusted by replacing only the cam, and the transfer speed, the separation between flexible containers delivered to the production lines, and the length of the path of translation of the carriages can be regulated by means of the mentioned programmable adjustment device.

It must also be pointed out that with the present embodiment, movement of all the clamps in a transverse path is unnecessary since at least one of them can be limited to performing movement only in the translation path, which results in greater mechanical simplicity of the present device.

The present invention also describes a method for transferring empty flexible containers from aligned collection positions in the translation path to misaligned delivery positions in the translation path, which allows collecting flexible containers supplied by a single supply device and delivering them to at least one conveyor device feeding at least two production lines.

Said method includes the steps of gripping at least two flexible containers arranged in at least two collection positions by means of at least two clamps of the transfer device and moving all the clamps in one translation path.

During said movement of the clamps in the translation path, all but one of the clamps furthermore move in a transverse path, perpendicular to the translation path, deviating from their trajectory.

As the clamp moves in the translation path, a cam follower connected to a cam changes the position of the clamp, and allows the position of the clamp, upon reaching the delivery position, to be misaligned in the translation path with respect to at least another one of the clamps.

This allows the flexible containers supplied in a single row to be able to be delivered in at least two rows to at least two parallel production lines.

Other features of the invention will be described in the detailed following description of an embodiment.

### Brief Description of the Drawings

The foregoing and other advantages and features will be better understood from the following detailed description of an embodiment in reference to the attached drawings which must be interpreted in an illustrative and non-limiting manner, in which:
Figure 1 shows a perspective view of the transfer device, the clamps being in an intermediate position between the collection position and the delivery position, with neither the supply device nor the conveyor device being depicted in their entirety;
Figure 2a shows a plan view of the transfer device, with neither the supply device nor the conveyor device being depicted in their entirety, the clamps being in the collection position, gripping respective flexible containers;
Figure 2b shows a plan view of the transfer device, with neither the supply device nor the conveyor device being depicted in their entirety, the clamps being in an intermediate position between the collection position and the delivery position, conveying respective flexible containers, and the conveying clamps being prepared in the delivery positions to receive said flexible containers;
Figure 2c shows a plan view of the transfer device, with neither the supply device nor the conveyor device being depicted in their entirety, the clamps being in the delivery position, and the supply device having placed new flexible containers in the collection positions;
Figure 3 shows a perspective view of a diagram depicting the position of the flexible containers before transfer (using a discontinuous line) and after transfer, but without showing said transfer device or any other device, indicating the movement of said flexible containers moved by said transfer device by means of arrows, and indicating the collection and delivery positions.

### Detailed Description of an Embodiment

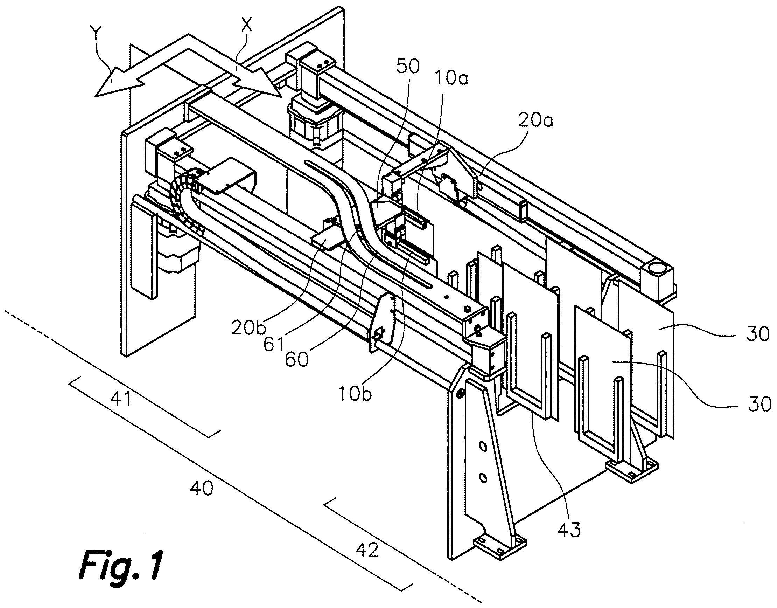

Figure 1 shows a transfer device 40 for flexible containers 30 according to a preferred embodiment provided with two clamps 10a and 10b, each of which is attached to a moving carriage 20a and 20b which can move linearly in one translation path X, driving said clamps 10a and 10b with them.

Said flexible containers 30 are deposited in the collection positions 31a and 31b by a supply device 41 which delivers them in one translation path X, forming a horizontal row of aligned and vertically arranged flexible containers 30 with the heat-sealed vertical seams adjacent to one another.

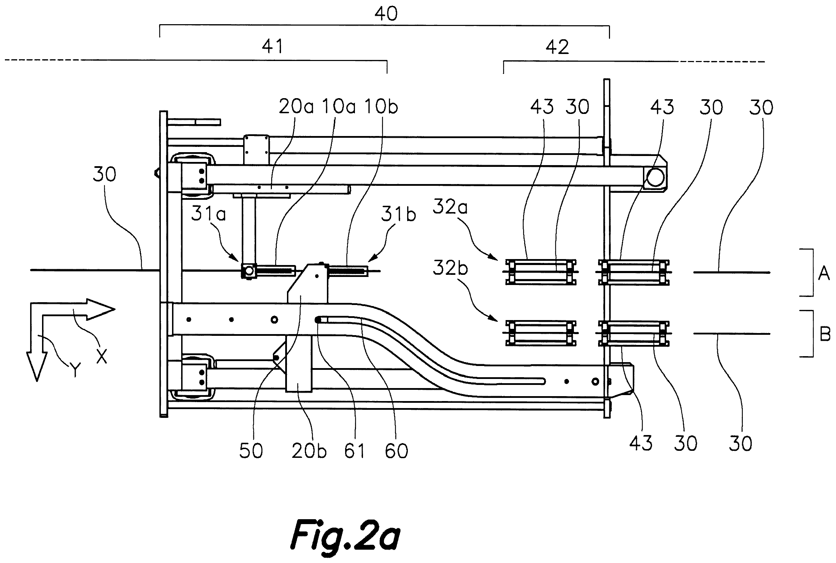

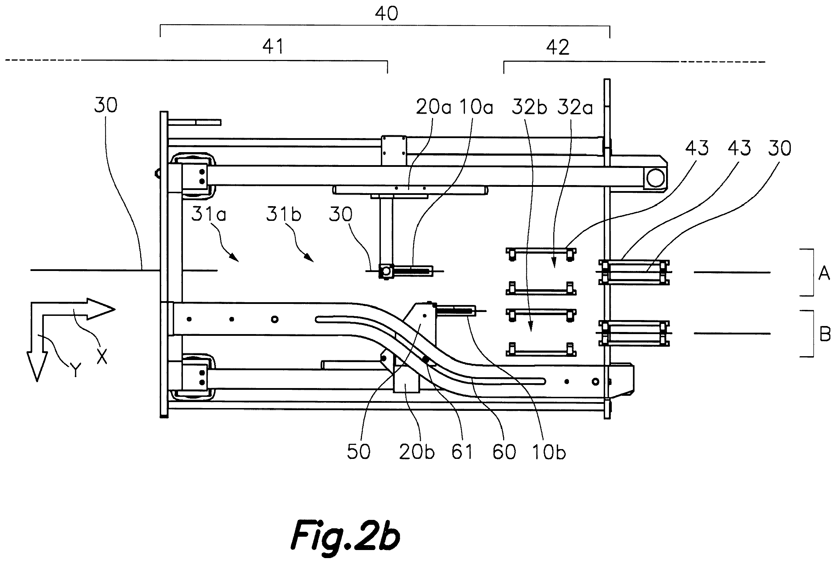

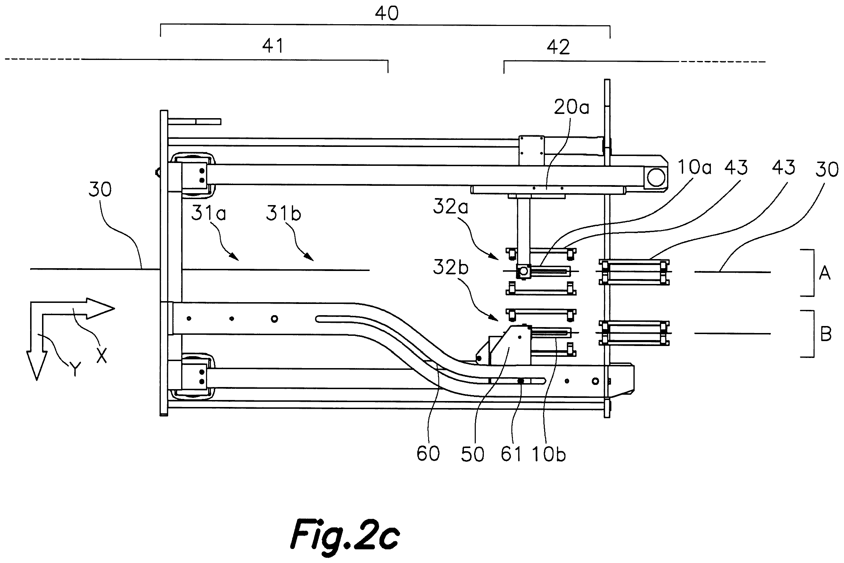

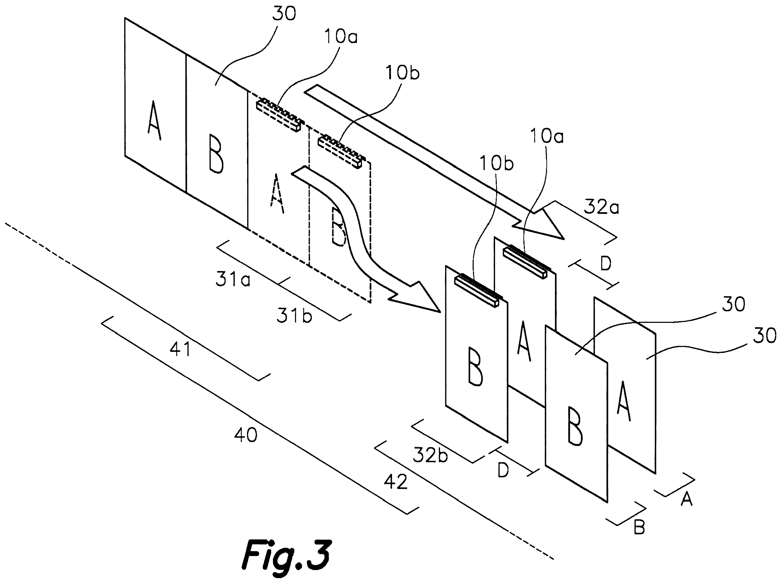

As can be seen in Figure 2a, 2b, 2c and 3, the transfer device 40 transfers said flexible containers 30 from collection positions 31a and 31b that are aligned in one translation path X to delivery positions 32a and 32b that are misaligned in the translation path X, such that flexible containers 30 arranged in a single row adjacent to one another are collected and delivered in two parallel delivery positions 32a and 32b feeding two production lines A and B by means of a conveyor device 42. In the present embodiment, said conveyor device 42 consists of a conveying clamp 43 for each delivery position 32a and 32b.

By regulating the transfer rate and the rate at which the conveyor device 42 delivers flexible containers 30 deposited in the delivery positions 32a and 32b in relation to the speed at which the flexible containers 30 are moved along the production lines A and B, a predetermined separation distance D between the flexible containers 30 delivered to said production lines A and B can be intercalated. A programmable adjustment device allows configuring said predetermined distance D by means of regulating the supply, transfer and delivery speed of the flexible containers 30 as well as the feeding speed of the production lines A and B.

Said clamps 10a and 10b are each envisaged for gripping a flexible container 30 deposited in one of said collection positions 31a or 31b and for depositing said flexible container 30 in a delivery position 32a or 32b. The flexible containers 30 deposited in delivery positions 32a and 32b are removed from said position by a conveyor device 42 feeding two parallel production lines A and B.

In order to deliver containers supplied in a single row in two rows, movement of one of the clamps 10b in a transverse path Y perpendicular to the translation path X is necessary. Said movement in a transverse path Y is obtained as a result of a transverse guide 50 that is fixed on the moving carriage 20b and allows said transverse movement Y of the clamp 10b with respect to said carriage 20b.

In this embodiment, the actuation of said movement in the transverse path Y is produced by means of a cam follower 61 connected to a cam 60 regulating the position of the clamp 10b in the transverse path Y depending on the position of the carriage 20b along its path of translation.

## Claims

1. A transfer device for transferring flexible containers in the form of bags made of a heat-sealable material from at least two adjacent collection positions, where the flexible containers (30) are horizontally aligned and have their respective heat-sealed vertical seams adjacent to one another, to at least two non-adjacent delivery positions, wherein said transfer device is in connection with:
• a supply device (41), which is intended for positioning a horizontal row of aligned and vertically arranged flexible containers in the mentioned collection positions (31 a and 31b), supplied in a production direction;
• at least one conveyor device (42), which is intended for removing the flexible containers (30) from the at least two delivery positions (32a and 32b), feeding at least two production lines (A and B); and
said transfer device (40) including:
• at least two operable and transferable clamps (10a and 10b), each of which is suitable for collecting a flexible container (30) in one of said collection positions (31a and 31b), by means of actuating the clamp (10a and 10b), and suitable for conveying said flexible container (30) to one of the at least two delivery positions (32a and 32b), by means of moving said clamp (10a and 10b);
**characterized in that**
• the at least two clamps (10a and 10b) configured for gripping and transferring at least two flexible containers (30) are assembled on at least two respective moving carriages (20a and 20b) intended for moving in parallel along one translation path (X), and for transferring said flexible containers (30) in said production direction, said moving carriages (20a and 20b) being actuated by at least one translation actuating device;
• all, or all but one, of said moving carriages (20b) have a transverse guide (50) arranged in a transverse path (Y) perpendicular to the translation path (X), such that the corresponding clamp (10b) assembled on said at least one moving carriage (20b) when moving along said translation path (X) moves in the transverse path (Y) on said transverse guide, with respect to said moving carriage (20b), introducing a deviation in the transverse path (Y) with respect to the translation path (X) and transferring said clamps (10a and 10b) and its corresponding gripped containers, by said moving carriages (20a and 20b), from the collection positions (31a and 31b) to the delivery positions (32a and 32b).

2. The device according to claim 1, **characterized in that** said clamp (10b) which moves on said transverse guide (50) in the transverse path (Y), is moved in said transverse path (Y) pushed by a cam follower (61) connected to a cam (60) arranged along the path of translation of the moving carriage (20b).

3. The device according to claim 1, **characterized in that** said clamp (10b) which moves on said transverse guide (50) in the transverse path (Y), moves in said transverse path (Y) actuated by means of an actuating device arranged on the corresponding moving carriage (20b).

4. The device according to claim 1, 2 or 3, **characterized in that** the length of the path of translation of the different moving carriages is different.

5. The device according to claim 4, **characterized in that** said difference in length of the path of translation between any two moving carriages (20a and 20b) supporting respective clamps (10a and 10b) is equal to the width, in the translation path, of a flexible container (30) or to a multiple of that distance.

6. The device according to claim 4, **characterized in that** said difference in length of the path of translation of any two moving carriages (20a and 20b) supporting respective clamps (10a and 10b) is equal to the predetermined separation distance (D) between two consecutive flexible containers (30) fed into one and the same production line (A or B), or a multiple of that distance.

7. The device according to claim 5 or 6, **characterized in that** adjustment means control the flexible container (30) collection and delivery rate and/or conveyor device (42) conveying rate.

8. The device according to claim 1, **characterized in that** the supply device (41) is a flexible container (30) forming unit or a preformed container supply unit.

9. The device according to claim 8, **characterized in that** the supply device (41) supplies flexible containers (30) that are joined to one another, and a cutting device suitable for separating said flexible containers (30) is located in a position immediately after the position of the supply device (41).

10. The device according to claim 9, **characterized in that** the cutting device separates the flexible containers (30) located in the at least two collection positions (31a and 31b).

11. The device according to any one of the preceding claims, **characterized in that** it has three clamps assembled on three moving carriages and three aligned collection positions in the translation path (X) and three delivery positions misaligned with one another in the translation path (X).

12. A transfer method for transferring empty flexible containers in the form of bags made of a heat-sealable material from at least two adjacent collection positions, where the flexible containers (30) are horizontally aligned and have their respective heat-sealed vertical seams adjacent to one another, to at least two non-adjacent delivery positions (32a and 32b), which includes the following steps:
• providing the transfer device (40) with a horizontal row of vertically arranged flexible containers in at least two collection positions (31a and 31b), supplied in a production direction by means of a supply device (41);
• holding at least two flexible containers (30) arranged in said at least two collection positions (31a and 31b), by means of at least two operable and transferable clamps (10a and 10b) which are part of the transfer device (40);
• transferring each flexible container (30) by means of moving each independent moving clamp (10a and 10b) holding it from said collection position (31a and 31b) to a delivery position (32a and 32b) where they are released, feeding at least one conveyor device (42) removing the flexible containers (30) deposited by the transfer device (40) in the delivery positions (32a and 32b); and
• feeding at least two production lines (A and B) by means of said conveyor device (42) **characterized in that** the step of transferring each flexible container (30) includes:
• moving in one translation path (X) at least two moving carriages (20a and 20b) activated by at least one translation actuating device, the clamps (10a and 10b) holding said flexible containers (30) being assembled on said moving carriages (20a and 20b), said movement transferring said flexible containers (30) in the production direction;
• moving all, or all but one, of the clamps (10a and 10b) holding said flexible containers (30) in a transverse path (Y) perpendicular to said translation path (X) in a manner simultaneous to the movement in the translation path (X), such that a deviation in the transverse path (Y) with respect to the translation path (X) is introduced, transferring said clamps (10a and 10b) and its corresponding gripped containers (30), by said moving carriages (20a and 20b), from the collection positions (31a and 31b) to the delivery positions (32a and 32b).

13. The method according to claim 12, **characterized in that** the clamps which move in the transverse path (Y) are actuated by a cam follower (61) connected to a cam (60) during the movement of the moving carriage (20a and/or 20b) in the path of translation.

14. The method according to claim 12, **characterized in that** said clamp moving on said transverse guide (50) in the transverse path (Y), moves in said transverse path (Y) actuated by means of an actuating device arranged on the corresponding moving carriage (20a and/or 20b).

15. The method according to claim 12, 13 or 14, **characterized in that** the predetermined distance (D) between two consecutive flexible containers (30) supplied to one and the same production line (A or B) is regulated by means of a programmable adjustment device controlling the speed of the transfer device (40) and the speed of the conveyor device (42) in relation to the speed at which the flexible containers (30) move in the production lines.

16. The method according to claim 12, **characterized in that** adjustment means allow changing the flexible container (30) collection and delivery rate and/or regulating the predetermined distance (D) between two flexible containers (30) delivered to one and the same production line (A or B).

## Patentansprüche

1. Übertragungsvorrichtung zur Übertragung von flexiblen Behältern in Form von Beuteln, welche aus einem heißsiegelbaren Material hergestellt sind, von mindestens zwei angrenzenden Auffangpositionen, in welchen die flexiblen Behälter (30) waagerecht ausgerichtet sind und die jeweiligen heißgesiegelten senkrechten Nähte derselben zueinander angrenzend sind, zu mindestens zwei nicht angrenzenden Lieferpositionen, wobei die genannte Übertragungsvorrichtung mit:
• einer Zuführvorrichtung (41), welche dafür bestimmt ist, die Positionierung einer waagerechten Reihe von ausgerichteten und senkrecht angeordneten flexiblen Behältern in den genannten Auffangpositionen (31 a und 31 b), in einer Herstellungsrichtung zugeführt;
• mindestens einer Fördervorrichtung (42), welche dafür bestimmt ist, die flexiblen Behälter (30) aus den mindestens zwei Lieferpositionen (32a und 32b) zu entfernen, wobei mindestens zwei Herstellungslinien (A und B) gespeist werden; angeschlossen ist,
und
wobei die genannte Übertragungsvorrichtung (40) Folgendes umfasst:
• mindestens zwei betätigbare und verfahrbare Klemmen (10a und 10b), wobei jede dazu geeignet ist, einen flexiblen Behälter (30) in einer der genannten Auffangpositionen (31 a und 31 b) aufzufangen, mittels der Betätigung der Klemme (10a und 10b), und dazu geeignet ist, den genannten flexiblen Behälter (30) zu einer der mindestens zwei Lieferpositionen (32a und 32b) zu fördern, mittels der Bewegung der genannten Klemme (10a und 10b);
**dadurch gekennzeichnet, dass**
• die mindestens zwei Klemmen (10a und 10b), welche zum Greifen und Übertragen der mindestens zwei flexiblen Behälter (30) ausgebildet sind, auf mindestens zwei jeweiligen beweglichen Schlitten (20a und 20b) montiert sind, welche dafür bestimmt sind, sich parallel entlang eines Verschiebungsweges (X) zu bewegen, und die genannten flexiblen Behälter (30) in die genannte Herstellungsrichtung zu übertragen, wobei die genannten beweglichen Schlitten (20a und 20b) von mindestens einer Vorrichtung zur Verschiebungsbetätigung betätigt werden;
• alle, oder alle bis auf einen, der genannten beweglichen Schlitten (20b) eine Querführung (50) aufweisen, welche in einem, zum Verschiebungsweg (X) senkrechten Querweg (Y) angeordnet ist, so dass sich die entsprechende Klemme (10b), montiert auf dem genannten mindestens einen beweglichen Schlitten (20b), im Querweg (Y) auf der genannten Querführung bewegt, in Bezug auf den genannten beweglichen Schlitten (20b), so dass eine Abweichung im Querweg (Y) in Bezug auf den Verschiebungsweg (X) eingeführt wird und die genannten Klemmen (10a und 10b) und die entsprechenden gegriffenen Behälter derselben vom genannten beweglichen Schlitten (20a und 20b) von den Auffangpositionen (31a und 31b) zu den Lieferpositionen (32a und 32b) übertragen werden.

2. Vorrichtung nach Anspruch 1, **dadurch gekennzeichnet, dass** die genannte Klemme (10b), welche sich auf der genannten Querführung (50) im Querweg (Y) bewegt, im genannten Querweg (Y) bewegt wird, geschoben von einem Nockenfolger (61), welcher mit einem Nocken (60) angeschlossen ist, welche entlang des Verschiebungsweges des beweglichen Schlittens (20b) angeordnet ist.

3. Vorrichtung nach Anspruch 1, **dadurch gekennzeichnet, dass** sich die genannte Klemme (10b), welche sich auf der genannten Querführung (50) im Querweg (Y) bewegt, im genannten Querweg (Y) bewegt, betätigt mittels einer Betätigungsvorrichtung, welche auf dem entsprechenden beweglichen Schlitten (20b) angeordnet ist.

4. Vorrichtung nach Anspruch 1, 2 oder 3, **dadurch gekennzeichnet, dass** die Länge des Verschiebungsweges der unterschiedlichen beweglichen Schlitten unterschiedlich ist.

5. Vorrichtung nach Anspruch 4, **dadurch gekennzeichnet, dass** der genannte Unterschied bei der Länge des Verschiebungsweges zwischen zwei beliebigen beweglichen Schlitten (20a und 20b), welche jeweilige Klemmen (10a und 10b) tragen, gleich der Breite, im Verschiebungsweg, eines flexiblen Behälters (30) ist oder ein Vielfaches dieses Abstandes.

6. Vorrichtung nach Anspruch 4, **dadurch gekennzeichnet, dass** der genannte Unterschied bei der Länge des Verschiebungsweges zwischen zwei beliebigen beweglichen Schlitten (20a und 20b), welche jeweilige Klemmen (10a und 10b) tragen, gleich dem vorgegebenen Trennungsabstand (D) zwischen zwei aufeinanderfolgenden flexiblen Behältern (30), welche in die gleiche Herstellungslinie (A oder B) gespeist werden, oder ein Vielfaches dieses Abstandes.

7. Vorrichtung nach Anspruch 5 oder 6, **dadurch gekennzeichnet, dass** Einstellmittel den Auffang- und Lieferrhythmus der flexiblen Behälter (30) und/oder den Förderrhythmus der Fördervorrichtung (42) steuern.

8. Vorrichtung nach Anspruch 1, **dadurch gekennzeichnet, dass** die Zuführvorrichtung (41) eine Einheit, welche flexible Behälter (30) bildet, oder eine Einheit, welche vorgeformte Behälter zuführt, ist.

9. Vorrichtung nach Anspruch 8, **dadurch gekennzeichnet, dass** die Zuführvorrichtung (41) flexible Behälter (30) zuführt, welche miteinander verbunden sind, und eine Schneidevorrichtung, welche dazu geeignet ist, die genannten flexiblen Behälter (30) zu trennen, in einer Position unmittelbar nach der Position der Zuführvorrichtung (41) liegt.

10. Vorrichtung nach Anspruch 9, **dadurch gekennzeichnet, dass** die Schneidevorrichtung die flexiblen Behälter (30) trennt, welche in den mindestens zwei Auffangpositionen (31 a und 31 b) liegen.

11. Vorrichtung nach einem der vorhergehenden Ansprüche, **dadurch gekennzeichnet, dass** sie drei Klemmen, welche auf drei beweglichen Schlitten montiert sind, und drei ausgerichtete Auffangpositionen im Verschiebungsweg (X) und drei Lieferpositionen, welche im Verschiebungsweg (X) nicht zueinander ausgerichtet sind, aufweist.

12. Übertragungsverfahren zur Übertragung von leeren flexiblen Behältern in Form von Beuteln, welche aus einem heißsiegelbaren Material hergestellt sind, von mindestens zwei angrenzenden Auffangpositionen, in welchen die flexiblen Behälter (30) waagerecht ausgerichtet sind und die jeweiligen heißgesiegelten senkrechten Nähte derselben zueinander angrenzend sind, zu mindestens zwei nicht angrenzenden Lieferpositionen (32a und 32b), welches die folgenden Schritten umfasst:
• das Versehen der Übertragungsvorrichtung (40) mit einer waagerechten Reihe von senkrecht angeordneten flexiblen Behältern in mindestens zwei Auffangpositionen (31 a und 31 b), in einer Herstellungsrichtung mittels einer Zuführvorrichtung (41) zugeführt;
• das Halten mindestens zweier flexiblen Behälter (30), welche in den genannten mindestens zwei Auffangpositionen (31 a und 31 b) angeordnet sind, mittels mindestens zweier betätigbaren und verfahrbaren Klemmen (10a und 10b), welche Teil der Übertragungsvorrichtung (40) sind;
• das Übertragen jedes flexiblen Behälters (30), mittels der Bewegung von jeder unabhängigen beweglichen Klemme (10a und 10b), welche sie hält, von der genannten Auffangposition (31 a und 31 b) zu einer Lieferposition (32a und 32b), in welcher sie freigegeben werden und mindestens einer Fördervorrichtung (42) gespeist werden, welche die flexiblen Behälter (30) entfernt, welche von der Übertragungsvorrichtung (40) in die Lieferpositionen (32a und 32b) gelegt werden; und
• das Speisen mindestens zweier Herstellungslinien (A und B) mittels der genannten Fördervorrichtung (42)
**dadurch gekennzeichnet, dass** der Schritt des Übertragens jedes flexiblen Behälters (30) Folgendes umfasst:
• das Bewegen in einem Verschiebungsweg (X) mindestens zweier beweglichen Schlitten (20a und 20b), welche von mindestens einer Vorrichtung zur Verschiebungsbetätigung aktiviert wird, wobei die Klemmen (10a und 10b) die genannten flexiblen Behälter (30), welche auf den genannten beweglichen Schlitten (20a und 20b) montiert werden, halten, wobei die genannte Bewegung die genannten flexiblen Behälter (30) in die Herstellungsrichtung überträgt;
• das Bewegen aller, oder aller bis auf einer der, Klemmen (10a und 10b), welche die genannten flexiblen Behälter (30) in einem zum genannten Verschiebungsweg (X) senkrechten Querweg (Y) halten, in einer zur Bewegung im Verschiebungsweg (X) gleichzeitigen Weise, so dass eine Abweichung im Querweg (Y) in Bezug auf den Verschiebungsweg (X) eingeleitet wird, unter Übertragung der genannten Klemmen (10a und 10b) und der entsprechenden gegriffenen Behälter (30) derselben, durch den genannten beweglichen Schlitten (20a und 20b), von den Auffangpositionen (31 a und 31 b) zu den Lieferpositionen (32a und 32b).

13. Verfahren nach Anspruch 12, **dadurch gekennzeichnet, dass** die Klemmen, welche sich im Querweg (Y) bewegen, von einem Nockenfolger (61) betätigt werden, welcher mit einem Nocken (60) angeschlossen sind, während der Bewegung des beweglichen Schlittens (20a und/oder 20b) im Verschiebungsweg.

14. Verfahren nach Anspruch 12, **dadurch gekennzeichnet, dass** sich die genannte Klemme, welche sich auf der genannten Querführung (50) im Querweg (Y) bewegt, im genannten Querweg (Y) bewegt, betätigt mittels einer Betätigungsvorrichtung, welche auf dem entsprechenden beweglichen Schlitten (20a und/oder 20b) angeordnet ist.

15. Verfahren nach Anspruch 12, 13 oder 14, **dadurch gekennzeichnet, dass** der vorgegebene Abstand (D) zwischen zwei aufeinanderfolgenden flexiblen Behältern (30), welche der gleichen Herstellungslinie (A oder B) zugeführt werden, mittels einer programmierbaren Einstellvorrichtung reguliert wird, welche die Geschwindigkeit der Übertragungsvorrichtung (40) und die Geschwindigkeit der Fördervorrichtung (42) in Bezug auf die Geschwindigkeit, mit welcher sich die flexiblen Behälter (30) in den Herstellungslinien bewegen, steuert.

16. Verfahren nach Anspruch 12, **dadurch gekennzeichnet, dass** Einstellmittel es erlauben, den Auffang- und Lieferrhythmus der flexiblen Behälter (30) zu ändern und/oder den vorgegebenen Abstand (D) zwischen zwei flexiblen Behältern (30), welche der gleichen Herstellungslinie (A oder B) geliefert werden, zu regulieren.

## Revendications

1. Un dispositif convoyeur pour convoyer des récipients flexibles sous forme de sacs faits en un matériau thermosoudable d'au moins deux positions de ramassage adjacentes, où les récipients flexibles (30) sont alignés horizontalement et ont leurs jonctions verticales thermosoudées respectives verticales adjacentes les unes aux autres, et au moins deux positions de remise non adjacentes, où ce dispositif convoyeur est relié à
• un dispositif d'alimentation (41), destiné à positionner une rangée horizontale de récipients flexibles alignés et agencés verticaux dans ces positions de remise (31a et 31 b), alimentés dans un sens de production;
• au moins un dispositif convoyeur (42), destiné à retirer les récipients flexibles (30) d'au moins deux positions de remise (32a et 32b), alimentant au moins deux chaînes de production (A et B); et
ce dispositif convoyeur (40) comportant:
• au moins deux crampons pouvant fonctionner et être déplacés et de transfert (10a et 10b), chacun étant adapté pour ramasser un récipient flexible (30) dans une des positions de ramassage (31 a et 31 b), en actionnant le crampon (10a et 10b), et adapté pour convoyer ce récipient flexible (30) à au moins une des deux positions de remise (32a et 32b), en déplaçant ce crampon (10a et 10b);
**caractérisé en ce que**
• qu'au moins deux crampons (10a et 10b) configurés pour saisir et convoyer au moins deux récipients flexibles (30) sont assemblés sur au moins deux chariots mobiles respectifs (20a et 20b) destinés à se déplacer parallèles le long d'une voie de translation (X) et pour convoyer ces récipients flexibles (30) dans ce sens de production, ces chariots mobiles (20a et 20b) étant actionnés par au moins un dispositif actionneur de translation;
• tous sauf un de ces chariots mobiles (20b) ont une guide transversale (50) aménagée dans une voie transversale (Y) perpendiculaire à la voie de translation (X), de sorte que le crampon correspondant (10b) assemblé sur cet au moins un chariot mobile (20b) lorsqu'il se déplace le long de cette voie de translation (X) se déplace dans la voie transversale (Y) sur cette guide transversale par rapport à ce chariot mobile (20b), en introduisant une déviation dans la voie transversale (Y) par rapport à la voie de translation (X) et en convoyant ces crampons (10a et 10b) et leurs récipients correspondants saisis par ces chariots mobiles (20a et 20b), des positions de ramassage (31 a et 31 b) aux positons de remise (32a et 32b).

2. Le dispositif conformément à la revendication 1, **caractérisé en ce que** ce crampon (10b) qui se déplace sur cette guide transversale (50) dans la voie transversale (Y), se déplace dans cette voie transversale (Y) poussé par un suiveur de came (61) relié à une came (60) agencée le long de la voie de translation du chariot mobile (20b).

3. Le dispositif conformément à la revendication 1, **caractérisé en ce que** ce crampon (10b) qui se déplace sur cette guide transversale (50) dans la voie transversale (Y), se déplace dans cette voie transversale (Y) actionné au moyen d'un dispositif actionneur agencé sur le chariot mobile correspondant (20b).

4. Le dispositif conformément aux revendications 1, 2 ou 3, **caractérisé en ce que** la longueur de la voie de translation des différent chariots mobiles est différente.

5. Le dispositif conformément à la revendication 4, **caractérisé en ce que** cette différence de longueur de la voie de translation entre deux chariots mobiles (20a et 20b) quelconques supportant des crampons respectifs (10a et 10b) est égale à la largeur, dans la voie de translation, d'un récipient flexible (30) ou à un multiple de cet écart.

6. Le dispositif conformément à la revendication 4, **caractérisé en ce que** cette différence de longueur de la voie de translation de deux chariots mobiles (20a et 20b) quelconques supportant des crampons respectifs (10a et 10b) est égale à l'écart prédéterminé (D) entre deux récipients flexibles consécutifs (30) alimentés à une et même chaîne de production (A ou B) où à un multiple de cet écart.

7. Le dispositif conformément à la revendication 5 ou 6, **caractérisé en ce que** des moyens de réglage contrôlent le taux de ramassage et de remise de récipient flexible (30) et/ou le taux de convoiement du dispositif convoyeur (42).

8. Le dispositif conformément à la revendication 1, **caractérisé en ce que** le dispositif d'alimentation (41) est une unité de formation de récipient flexible (30) ou une unité d'alimentation de récipient préformé.

9. Le dispositif conformément à la revendication 8, **caractérisé en ce que** le dispositif d'alimentation (41) alimente les récipients flexibles (30) qui sont joints les uns aux autres et un dispositif de coupe adapté pour séparer ces récipients flexibles (30) est situé dans une position immédiatement après la position du dispositif d'alimentation (41).

10. Le dispositif conformément à la revendication 9, **caractérisé en ce que** le dispositif de coupe sépare les récipients flexibles (30) situés à au moins deux positions de ramassage (31a et 31 b).

11. Le dispositif conformément à une quelconque des revendications précédentes, **caractérisé en ce qu'**il a trois crampons assemblés sur trois chariots mobiles et trois positions de ramassage alignées dans la voie de translation (X) et trois positions de remise décentrées les unes des autres dans la voie de translation (X).

12. Une méthode de convoiement pour convoyer des récipients flexibles vides sous forme de sacs en un matériau thermosoudable d'au moins deux positions de ramassage adjacentes, où les récipients flexibles (30) sont alignés horizontaux et ont leurs joints respectifs thermosoudés verticaux adjacents les uns aux autres, à au moins deux positions de remise non adjacentes (32a et 32b), comportant les étapes suivantes:
• offrir au dispositif convoyeur (40) une rangée horizontale de récipients flexibles agencés verticaux à au moins deux positions de ramassage (31a et 31b), alimentés dans un sens de production au moyen d'un dispositif d'alimentation (41);
• maintenir au moins deux récipients flexibles (30) agencés dans ces au moins deux positions de remise (31a et 31 b), au moyen d'au moins deux crampons de fonctionnement et de convoiement (10a et 10b), qui sont une partie du dispositif convoyeur (40);
• transférer chaque récipient flexible (30) en déplaçant chaque crampon mobile indépendant (10a et 10b) le tenant de cette position de ramassage (31 a et 31 b) à une positon de remise (32a et 32b) où ils sont lâchés, en alimentant au moins un dispositif convoyeur (42) retirant les récipients flexibles (30) déposés par le dispositif convoyeur (40) aux positions de remise (32a et 32b); et
• alimenter au moins deux chaînes de production (A et B) au moyen de ce dispositif convoyeur (42)
**caractérisé en ce que** l'étape de convoiement de chaque récipient flexible (30) comporte:
• déplacer dans une voie de translation (X) au moins deux chariots mobiles (20a et 20b) activés par au moins un dispositif actionneur de translation, les crampons (10a et 10b) tenant ces récipients flexibles (30) étant assemblés sur ces chariots mobiles (20a et 20b), ce mouvement transférant ces récipients flexibles (30) dans le sens de production;
• déplacer tous ou tous sauf un des crampons (10a et 10b) tenant ces récipients flexibles (30) sur une voie transversale (Y) perpendiculaire à cette voie de translation (X), de sorte que la déviation dans la voie transversale (Y) par rapport à la voie de translation (X) est introduite, en convoyant ces crampons (10a et 10b) et leurs récipients saisis correspondants (30), par ces chariots mobiles (20a et 20b), des positions de ramassage (31 a et 31 b) aux positions de remise (32a et 32b).

13. La méthode conformément à la revendication 12, **caractérisé en ce que** les crampons qui se déplacent dans la voie transversale (Y) sont actionnés par un suiveur de came (61) relié à une came (60) durant le mouvement du chariot mobile (20a et/ou 20b) dans la voie de translation.

14. La méthode conformément à la revendication 12, **caractérisé en ce que** ce crampon qui se déplace sur cette guide transversale (50) dans la voie transversale (Y), se déplace dans cette voie transversale (Y) actionné au moyen d'un dispositif actionneur sur le chariot mobile correspondant (20a et/ou 20b).

15. La méthode conformément à la revendication 12, 13 ou 14 **caractérisé en ce que** l'écart prédéterminé (D) entre deux récipients flexibles consécutifs (30) alimentés à une et même chaîne de production (A ou B) est réglé au moyen d'un dispositif de réglage programmable contrôlant la vitesse du dispositif convoyeur (40) et la vitesse du dispositif convoyeur (42) par rapport à la vitesse à laquelle les récipients flexibles (30) se déplacent dans les chaînes de production.

16. La méthode conformément à la revendication 12, **caractérisé en ce que** les moyens de réglage permettent de changer le taux de ramassage et de remise de récipients flexibles (30) et/ou de régler l'écart prédéterminé (D) entre les récipients flexibles (30) remis à une et même chaîne de production (A ou B).
